# EUROPEAN PATENT APPLICATION

(11) **EP 1 336 593 A1**
(43) Date of publication of application: **20.08.2003**
(21) Application number: 01978828.0
(22) Date of filing: 18.10.2001
(51) Int. Cl.: C04B 18/16

(54) **ROUND POLISHED CONCRETE AGGREGATE UTILIZING CONCRETE SCRAPS AND METHOD OF MANUFACTURING THE CONCRETE AGGREGATE**

(30) Priority: 18.10.2000 JP 2000003186; 16.10.2001 JP 2001003175
(71) Applicant: Yamamoto, Hiromi, Fukuoka-shi, Fukuoka 814-0001 (JP)
(72) Inventor: Yamamoto, Hiromi, Fukuoka-shi, Fukuoka 814-0001 (JP)
(74) Representative: Haley, Stephen
(86) International application number: JP0109174
(87) International publication number: WO02032828

(57) **Abstract**

The present invention provides a producing technique of round polished concrete aggregate in which water-absorption characteristics are suppressed as low as possible while rounding an outer shape of the round polished concrete aggregate, and when the round polished concrete aggregate is used as concrete aggregate, a percentage of absolute volume can be enhanced and a unit water volume can be reduced.

The technique includes a material grinding process A in which waste concrete material aggregate 10 is ground to obtain ground concrete aggregate 12 and concrete powder 13, a concrete powder layer adhesion process B in which cement 3 is mixed into ground concrete aggregate and concrete powder and stirred, thereby adhering concrete powder layer 14 to an outer peripheral surface of the ground concrete aggregate, and round rough surface concrete aggregate 15 having round outer shape is obtained, and rubbing process C in which the round rough surface concrete aggregates are rubbed against each other, thereby obtaining round polished concrete aggregate 17 and rubbed-off concrete powder 18 whose surfaces are formed into polished surfaces 16.

## Description

### TECHNICAL FIELD

The present invention relates to a round polished concrete aggregate which can be used as concrete aggregate while using waste concrete aggregate obtained by crushing waste concrete as a subject of working, and to a producing method of the round polished concrete aggregate.

### BACKGROUND ART

In recent years, it is recommended to reuse, as concrete aggregate, the waste concrete generated when buildings or civil engineering structures are taken.

The concrete aggregate by the waste concrete is produced by crushing the waste concrete. Since a surface of the crushed concrete aggregate has large pits and projections and angular portions, it is not preferable to use the concrete aggregate as it is in terms of a percentage of absolute volume and a unit water volume.

Conventionally, when the waste concrete is reused as the concrete aggregate, cement in the waste concrete is removed and only the aggregate is recycled.

Conventionally, as the concrete aggregate, there are a thin aggregate having a powder diameter less than 5 mm, and a rough aggregate having a powder diameter of 5 to 20 mm, or 20 to 40 mm. These concrete aggregates are evaluated as having higher quality as its outer shape is more round. Therefore, river sands, sea sands, river ballast and sea ballast having round outer shapes are regarded as suitable as the concrete aggregates, and it is regarded not preferable to use crushed aggregates as they are because they have large pits and projections and angular portions on their surfaces.

That is, if concrete aggregates having round outer shapes, the percentage of absolute volume is enhanced and the unit water volume is reduced, and flowability of concrete so-called workability can be enhanced.

Conventionally, as concrete aggregate having round outer shape, there is known a ground aggregate obtained by inputting aggregates into a tumbling drum, the aggregates are stirred by the tumbling drum, and angular portions are removed by rubbing and collision of the aggregates.

There is a known concrete round aggregate as described in Japanese Patent Application Laid-open No. H7-126052 in which cement paste into which cement, water, synthetic resin emulsion are mixed is sprinkled on a surface of the aggregate, and the cement paste is allowed to adhere to the surface while rotating the same so that the outer shape is rounded.

As described above, the concrete aggregate by the waste concrete has large pits and projections or angular portions and thus, it is not preferable to use the concrete aggregate as it is in terms of the percentage of absolute volume and the unit water volume.

Further, in the case of the ground aggregates obtained by removing the angular portions by inputting the aggregates into the rotary drum and rubbing or colliding between the aggregates, sharp angular portions are removed, but the outer shapes do not have sufficient roundness.

Further, since this method is of wet type in which the rotary drum is rotated while flowing water, concrete powder included in crushed raw stone is swashed away. Therefore, concrete aggregates having almost no concrete powder (including powder) are formed.

The concrete powder generated by swashing are recycled, but there is no use for such concrete powder. For example, such concrete powder is used for burying, water is not removed due to water-retaining characteristics of the concrete powder, there are problems that the stones are softened (so-called pus) due to the water and the stones can not be solidified (water can not be removed). Therefore, the concrete powder is accumulated and left, or disposed off as industrial waste at a cost, and it is difficult to settle the concrete powder under present circumstances.

If the cement paste is adhered to surfaces of the aggregates to round the outer shapes, although the percentage of absolute volume can be enhanced by the round outer shapes, since the surfaces are still rough, there is a problem that a water-absorption ratio becomes extremely high.

Further, since the cement paste having flowability is sprinkled to the surfaces of the aggregates, when they are worked, the cement paste is adhered to an inner surface of the rotation container, the inner surface of the rotation container is contaminated, and there is a problem that much labor is required for removing the contamination.

The present invention has been accomplished to solve the above conventional problems based on an idea which is opposite from the conventional technique in which cement in waste concrete is removed and only aggregate is recycle. It is a first object of the invention to provide round polished concrete aggregate in which waste concrete material aggregate obtained by crushing waste concrete is a subject of working, water-absorption characteristics are limited as small as possible while rounding the outer shape, and when this is used as concrete aggregate, the percentage of absolute volume can be enhanced, unit water volume is reduced, and flowability of concrete, so-called workability is enhanced.

In producing round polished concrete aggregate utilizing this waste concrete, it is a second object of the invention to provide a producing method of round polished concrete aggregate in which concrete powder generated during the producing process is effectively utilized, the concrete powder is introduced into the round polished concrete aggregate which is a product and the round polished concrete aggregate can be produced efficiently.

In producing round polished concrete aggregate utilizing this waste concrete, it is a third object of the invention to provide a producing method of round polished concrete aggregate in which when the aggregate is temporarily accumulated and stored during the producing process, it is possible to prevent aggregates from bonding with each other.

### DISCLOSURE OF THE INVENTION

To achieve the first object, according to a round polished concrete aggregate (claim 1) of the present invention,
waste concrete material aggregate obtained by crushing waste concrete is ground and angular portions are removed to obtain ground concrete aggregate, concrete powder layer to which concrete powder (including concrete powder) is bonded by cement is adhered to an outer peripheral surface of the ground concrete aggregate, and its outer shape is rounded, and the surface is formed into a polished surface.

In this round polished concrete aggregate, there are a mode in which the waste concrete material aggregate is waste concrete thin aggregate having powder diameter less than 5 mm (claim 2), a mode in which the waste concrete material aggregate is waste concrete rough aggregate having powder diameter of 5 to 25 mm (claim 3), and a mode in which the waste concrete material aggregate includes waste concrete thin aggregate having powder diameter less than 5 mm and waste concrete rough aggregate having powder diameter of 5 to 25 mm (claim 4).

In the round polished concrete aggregate, there is a mode in which the round polished concrete aggregate is utilized as concrete aggregate as it is, or the round polished concrete aggregate is sorted and is utilized as concrete aggregate (claim 5).

To achieve the second object, a producing method of round polished concrete aggregate (claim 6) of the present invention comprises,
a material grinding process in which waste concrete material aggregate obtained by crushing waste concrete is ground such that angular portions thereof are removed, thereby obtaining ground concrete aggregate and concrete powder (including concrete powder),
a concrete powder layer adhesion process in which cement and water are mixed into the ground concrete aggregate and concrete powder obtained in the material grinding process and stirred, thereby adhering concrete powder layer to which the concrete powder is bonded by cement to an outer peripheral surface of the ground concrete aggregate, thereby obtaining round rough surface concrete aggregate having round outer shape, and
a rubbing process in which round rough surface concrete aggregates obtained in the concrete powder layer adhesion process are rubbed against each other to obtain round polished concrete aggregate and rubbed-off concrete powder (including rubbed concrete powder) whose surfaces are formed into polished surfaces.

To achieve the third object, a producing method of round polished concrete aggregate (claim 7) of the present invention comprises,
a material grinding process in which waste concrete material aggregate obtained by crushing waste concrete is ground such that angular portions thereof are removed, thereby obtaining ground concrete aggregate and concrete powder (including concrete powder),
a concrete powder layer adhesion process in which cement and water are mixed into the ground concrete aggregate and concrete powder obtained in the material grinding process and stirred, thereby adhering concrete powder layer to which the concrete powder is bonded by cement to an outer peripheral surface of the ground concrete aggregate, thereby obtaining round rough surface concrete aggregate having round outer shape,
a concrete powder adhering process in which concrete powder is adhered to the round rough surface concrete aggregate obtained by the concrete powder layer adhesion process and stirred, thereby preventing the round rough surface concrete aggregates from bonding to each other, and
a rubbing process in which round rough surface concrete aggregates obtained in the concrete powder adhering process are rubbed against each other to obtain round polished concrete aggregate and rubbed-off concrete powder (including rubbed concrete powder) whose surfaces are formed into polished surfaces.

In the above producing method, the waste concrete is first crushed to obtain the waste concrete material aggregate. In this case, reinforcements and scrap pieces of wood included in the waste concrete are removed.

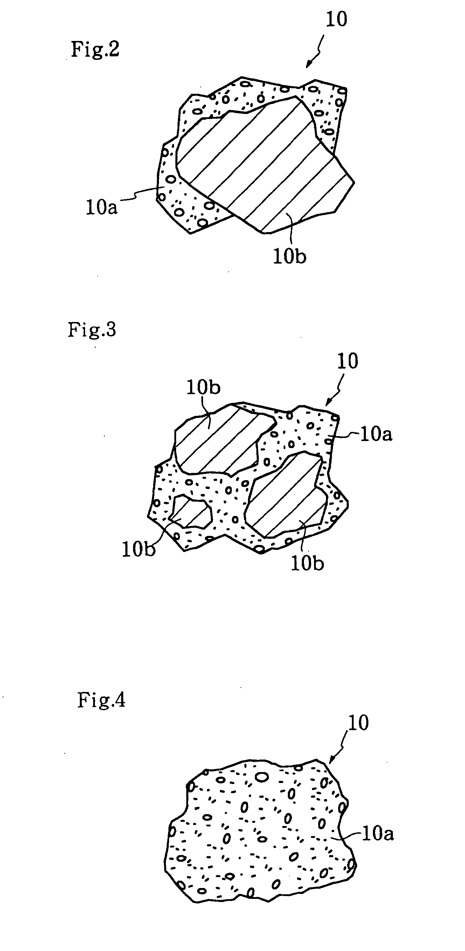

Since aggregates (rough aggregates, thin aggregates) are included in concrete, the waste concrete material aggregate obtained by crushing the waste concrete includes various states such as a state in which mortar 10a in which cement and thin aggregate are mixed is adhered around rough aggregate 10b as shown in Fig. 2, a state in which a single or a plurality of rough aggregates 10b are mixed in the mortar 10a as shown in Fig. 3, and a state in which only cement and thin aggregate are mixed in the mortar 10a The waste concrete material aggregate mentioned in the present invention includes all of the above states.

In the material grinding process, the waste concrete material aggregate is ground, the angular portions of the waste concrete material aggregate are removed to obtain the ground concrete aggregate, and at the same time, the concrete powder from which angular portions are removed by grinding is obtained.

In this case, waste concrete thin aggregate having powder diameter of less than 5 mm, waste concrete rough aggregate having powder diameter of 5 to 25 mm are used singularly or in combination.

In generally, concrete powder is included in the waste concrete material aggregate. The waste concrete material aggregate including concrete powder is ground in the material grinding process. Therefore, when the material grinding process is completed, concrete powder in an amount corresponding to a sum of originally included concrete powder and concrete powder generated by the grinding can be obtained.

Further, as a triturator. it is possible to use a triturator in which a rotor is eccentrically provided in a lateral type rotary drum, the rotary drum and the rotor are rotated in the opposite directions and the waste concrete material aggregate is stirred, and the angular portions are removed by rubbing or colliding the waste concrete material aggregates with each other. Alternatively, the angular portions of the waste concrete material aggregate may be removed using an impeller, a Barmac or the like. A ball mill or a rod mill are crushers used for obtaining waste concrete material aggregate mentioned in the present invention, and they can not remove angular portions of the waste concrete material aggregate and they are not suitable for grinding.

That is, grinding is working for removing angular portions of the waste concrete material aggregate and rounds its shape. It is natural that a portion of the waste concrete material aggregate is crushed at the time of working, and the grinding can be said as polishing working including the crushing.

The supply of waste concrete material aggregate, and the taking-out operation of the ground concrete aggregate and concrete powder after the grinding may be carried out in a continuously processing system in which the waste concrete material aggregate is continuously supplied and in this state, the ground concrete aggregate and concrete powder are taken out, or in a batch system in which they are processed constant-amount by constant amount.

Next, in the concrete powder layer adhesion process, cement is mixed in the ground concrete aggregate and concrete powder obtained in the material grinding process and stirred. With this step, the concrete powder is bonded to the outer peripheral surface of the ground concrete aggregate by cement to obtain the concrete powder layer, and its outer shape is rounded to obtain the round rough surface concrete aggregate.

If the cement is mixed in the ground concrete aggregate and the concrete powder and stirred in this manner, the concrete powder is bonded by the adhering force of the cement, the concrete powder layer to which the concrete powder is bonded is adhered to the outer peripheral surface of the ground concrete aggregate, and the round rough surface concrete aggregate can be obtained.

In this case, the concrete powder is bonded by the cement and introduced into the concrete powder layer. Therefore, when the concrete powder layer adhesion process is completed, there exists almost no concrete powder. With this, the waste concrete is almost completely recycled as the round rough surface concrete aggregate.

Since the concrete powder is bonded by the cement while the concrete powder is stirred, cement and concrete powder enter in the recesses of the ground concrete aggregate, the recesses are filled with concrete powder layer, and the outer shape is rounded as a whole.

There is a conventional technique for recycling aggregate from waste concrete as recycling technique of waste concrete (e.g., Diagate produced by Mitsubishi Materials Corporation). This technique recycle only aggregate from waste concrete.

Therefore, component other than recycled aggregate, i.e., mortar which is not recycled is generated, and this must be disposed off as waste. That is, this conventional recycling technique is a partial recycling technique of waste concrete, and is different from the present invention in which concrete powder is taken into the concrete powder layer, thereby substantially completely recycle the waste concrete as the round rough surface concrete aggregate.

Water is naturally required for obtaining the adhering force by cement.

An amount of water in this case is set such that the concrete powder can be bonded by cement, and this amount is adjusted such that the ground concrete aggregate is dried or water is added so that the concrete powder can appropriately be bonded by cement in accordance with dry state of the ground concrete aggregate. In generally, it is preferable that water of about 3 to 10% by weight of waste concrete material aggregate is added. As the cement which is to be added and mixed, Portland cement, mixed cement, various cement prescribed in JIS, and special cement which is not prescribed in JIS can be used.

The adding and mixing ratio of cement is set in accordance with conditions such as ground concrete aggregate, powder diameter of concrete powder, and a ratio of these elements, and if an amount of cement is excessively small, the adhering force can not be obtained, and if the amount of cement is excessively large, the ground concrete aggregates are bonded to each other and costs are increased. Therefore, the adding and mixing ratio of cement is set while maintaining the adhering force and preventing the ground concrete aggregates from excessively bonding to each other. In general, it is preferable that the adding and mixing ratio of cement is about 3 to 10% by weight of waste concrete material aggregate.

It is preferable that the mixing and stirring operation in the concrete powder layer adhesion process is carried out such that the ground concrete aggregate, the concrete powder, cement and water are sufficiently mixed.

For example, using the lateral type tumbling drum is used, the ground concrete aggregate, the concrete powder and cement are input from the one inlet opening, and they are mixed and stirred by the tumbling drum, and the processed round rough surface concrete aggregate is taken out from the other outlet opening. With this operation, they are sufficiently mixed and stirred by the tumbling drum, the quality is uniformed, and the round rough surface concrete aggregate can continuously be obtained.

A device used in the concrete powder layer adhesion process is not limited to the tumbling drum, and it is also possible to use a mixing and stirring device having rotary blades in a vertical or lateral type container.

There is a mode (claim 8) in which in the concrete powder layer adhesion process, concrete powder is bonded to concrete powder layer by cement, the concrete powder layer is adhered to the outer peripheral surface of the ground concrete aggregate while vibrating the concrete powder layer.

If the concrete powder layer is adhered while vibrating the same, the concrete powder layer itself is tightened and thus its strength is enhanced, and the adhering force of the concrete powder layer with respect to the ground concrete aggregate is enhanced.

As a vibrating method, the tumbling drum itself or a support frame of the tumbling drum is resiliently supported by a spring, a rubber mat, a rubber bracket or the like, a vibrator is mounted, the tumbling drum is rotated and in this state, vibration caused by the vibrator is entirely or partially applied to the tumbling drum.

There is a mode (claim 9) in which in the concrete powder layer adhesion process, ultra-concrete powder are included in water which is used for obtaining adhering force of the cement.

If ultra-concrete powder are included in water in this manner, since the ultra-concrete powder enter in the concrete powder layer or ground concrete aggregate together with water, densities of the concrete powder layer and ground concrete aggregate are increased, and the strength can be enhanced.

As a method for including ultra-concrete powder into water, the ultra-concrete powder may previously be added to water, or water and the ultra-concrete powder may be supplied separately, and the ultra-concrete powder may be included into water during operation of the concrete powder layer adhesion process.

As the ultra-concrete powder, powder having powder diameter of 1/50 to 1/100 of a powder diameter of cement such as silica fumes, and the ultra-concrete powder of 1 to 30% by weight of cement is added.

Next, in the rubbing process, the round rough surface concrete aggregates obtained in the concrete powder layer adhesion process are rubbed each other, and round polished concrete aggregate and rubbed-off concrete powder (including rubbed concrete powder) whose surfaces are formed into polished surfaces are obtained.

In the case of the round rough surface concrete aggregate obtained in the concrete powder layer adhesion process, the concrete powder layer to which the concrete powder is bonded by the adhering force of cement is only adhered to the outer peripheral surface of the ground concrete aggregate. Therefore, a surface thereof is rough and a surface area is large. Therefore, the water-absorption ratio is also high.

Thereupon, if the surface is formed into the polished surface in the rubbing process, the roughness on the rough surface is removed, and the surface area can be reduced. With this, water-retaining ratio can be reduced. At the same time, since the concrete powder is rubbed off from the surface of the concrete powder layer, the rubbed-off concrete powder can be obtained.

Further, when the round polished concrete aggregate is used as concrete aggregate, if only the round polished concrete aggregate is used, there is an inconvenience that the powder distribution is deviated. If rubbed-off concrete powder is obtained, the deviation in powder distribution is eliminated, and the percentage of absolute volume can be enhanced. As a rubbing device, like the device used in the crushing step, it is possible to use a rubbing device in which a rotor is eccentrically provided in a lateral rotary drum, the rotary drum and the rotor are rotated in the opposite directions, the round rough surface concrete aggregates are stirred, the surface is rubbed by rubbing or colliding the round rough surface concrete aggregates with each other.

It is only necessary to rub such that roughness on the surface is removed, and it is not always necessary to polish until a shine is obtained.

When the round polished concrete aggregate and rubbed-off concrete powder produced in this manner are used as concrete aggregate, the round polished concrete aggregate can be used singularly, or the round polished concrete aggregate can be mixed with existing aggregate (see sand, river sand, crushed sand, crushed stone) in accordance with requirement.

In the round polished concrete aggregate of the present invention, the content of the rubbed-off concrete powder which is produced at the same time is not especially limited. When the round polished concrete aggregate is preferably used as concrete aggregate, however, it is desirable that the content of the rubbed-off concrete powder is meet the range described in the attached document 1 of JIS A5308.

The amount of rubbed-off concrete powder is adjusted by adjusting the polishing time with respect to a necessary amount of the rubbed-off concrete powder.

In the round polished concrete aggregate of the present invention, the water-absorption characteristics are suppressed as compared with the round rough surface concrete aggregate while rounding the outer shape. Therefore, when the round polished concrete aggregate is used as concrete aggregate, it is possible to maintain the quality as aggregate, the percentage of absolute volume is enhanced and the unit water volume is reduced, and flowability of concrete so-called workability can be enhanced.

When the round polished concrete aggregate of the present invention is to be produced, the material grinding process, the concrete powder layer adhesion process and the rubbing process may be carried out continuously on a continuous line, but usually, the ground concrete aggregate and concrete powder (including concrete powder) obtained in the material grinding process are once taken out from a working device (e.g., the lateral rotary drum), and they are input to another working device (e.g., the lateral tumbling drum) and processed in the next concrete powder layer adhesion process, the round rough surface concrete aggregate obtained in this step is once taken out from the working device, and this is input and processed in another working device (e.g., the lateral rotary drum) in the next rubbing process, and the round polished concrete aggregate obtained in this step is taken out from the working device and shipped.

When the worked products are taken out whenever the worked products passes through the steps, the worked products are accumulated and stored temporarily. Especially the round rough surface concrete aggregate obtained in the concrete powder layer adhesion process includes moisture in its concrete powder layer, the round rough surface concrete aggregates are bonded to each other by weight of their own at the time of accumulation.

Thereupon, the producing method (claim 7) of the present invention includes a concrete powder adhering process in which concrete powder are added in the round rough surface concrete aggregate and stirred, thereby preventing the round rough surface concrete aggregates from bonding to each other.

If the concrete powder are added and stirred in this manner, the concrete powder function as sword powder used when noodle is cooked or sword powder which prevents rice-cakes from bonding to each other, and it is possible to prevent the round rough surface concrete aggregates from bonding to each other.

As the concrete powder used in the concrete powder adhering process, only the concrete powder may be added, or concrete powder may be added by adding thin aggregate or rough aggregate including concrete powder.

For example, portions of ground concrete aggregate and concrete powder (including concrete powder) obtained in the material grinding process may be remained without working in the concrete powder layer adhesion process, the remained ground concrete aggregate and concrete powder (including concrete powder) may be added in the round rough surface concrete aggregate and stirred, or separately prepared concrete powder, or thin aggregate or rough aggregate including concrete powder may be used.

It is preferable that the concrete powder adhering process is carried out after the concrete powder layer adhesion process. For example, if concrete powder are added in front of the outlet opening of the tumbling drum which carries out the concrete powder layer adhesion process and the concrete powder are stirred by the rotation of the tumbling drum, the concrete powder adhering process can be carried out continuously after the concrete powder layer adhesion process.

### BRIEF DESCRIPTION OF THE DRAWINGS

Fig. 1 is a process chart showing an embodiment of a producing method of round polished concrete aggregate.
Fig. 2 is a sectional view of waste concrete material aggregate.
Fig. 3 is a sectional view of waste concrete material aggregate.
Fig. 4 is a sectional view of waste concrete material aggregate.

### BEST MODE FOR CARRYING OUT THE INVENTION

An embodiment of the present invention will be explained below based on the drawings . Concrete structures of the present invention are not limited to this embodiment of course.

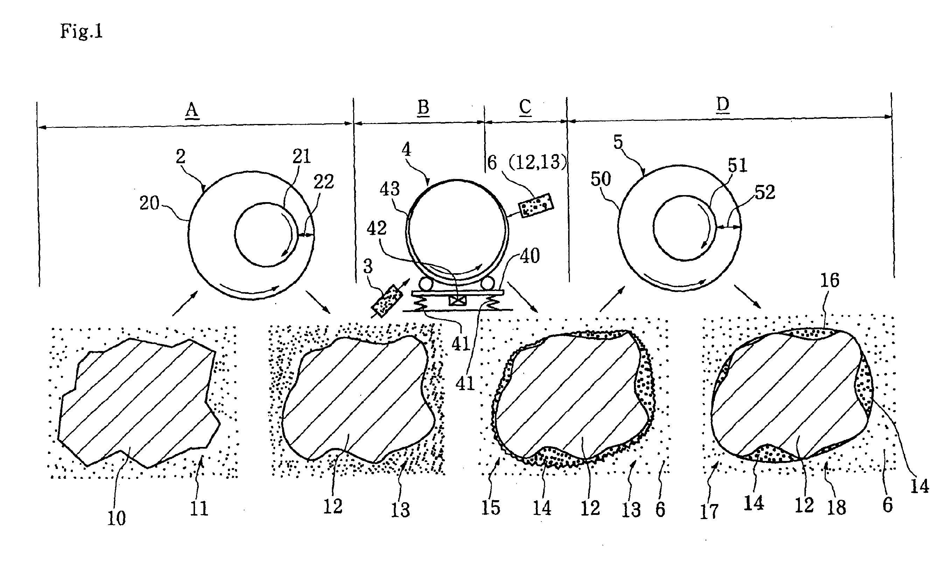

Fig. 1 is a process chart showing an embodiment of a producing method of round polished concrete aggregate.

This producing method includes a material grinding process A, a concrete powder layer adhesion process B, a concrete powder adhering process C and a rubbing process D. Each step will be explained below.

First, in the material grinding process A, a waste concrete material aggregate 10 obtained by crushing waste concrete is ground by a triturator 2 to obtain ground concrete aggregate 12 in which angular portions of the waste concrete material aggregate 10 are removed. At the same time, a concrete powder 13 from which angular portions are removed by grinding is obtained.

As the waste concretematerial aggregate 10, waste concrete thin aggregate having powder diameter of less than 5 mm, waste concrete rough aggregate having powder diameter of 5 to 25 mm are used singularly or in combination.

As a device for carrying out grinding, there is used the triturator 2 (e.g., Hurricane made by Shin Roku Seiki Kabushiki Kaisha) in which a lateral type rotary drum 20 is provided at its inner peripheral surface with projections (not shown), a rotor 21 is formed at its outer peripheral surface with projections (not shown), and the rotor 21 is eccentrically provided in the rotary drum 20. A predetermined amount of waste concrete material aggregates 10 is input into the rotary drum 20, the rotary drum 20 and the rotor 21 are rotated in the opposite directions and in this state, the waste concrete material aggregates 10 are sandwiched between opposed gap 22 to stir the waste concrete material aggregates 10 such the they are rubbed against each other, thereby removing angular portions and forming round surfaces.

In this case, a diameter of the rotary drum 20 is about 2m, the revolution number thereof is 2 to 20 rpm, and the revolution number of the rotor 21 is 3 to 30 rpm.

When the material grinding process A has been completed, ground concrete powder 13 in an amount of a sum of the waste concrete material aggregates 10 and raw material concrete powder 11 which was originally included in the aggregates 10 is obtained.

Next, in the concrete powder layer adhesion process B, cement 3 is mixed into the ground concrete aggregate 12 obtained by the material grinding process A and concrete powder 13, and they are stirred. With this, a concrete powder layer 14 obtained by adhering the concrete powder 13 to the cement 3 is adhered to the outer peripheral surface of the ground concrete aggregate 12, thereby obtaining round rough surface concrete aggregate 15 having round outer shape.

In this case, since the bonding of the concrete powder 13 by the cement 3 is carried out while stirring these elements, the concrete powder 13 bonded by the cement 3 enters into a recess of the ground concrete aggregate 12, and recess is filled with concrete powder layer 14, and the outer shape is rounded as a whole.

In the round rough surface concrete aggregate 15, the concrete powder layer 14 which is bonded to the concrete powder 13 by adhering force of the cement only adheres to the outer peripheral surface of the ground concrete aggregate 12. Therefore, its surface is rough and a surface area is large.

In this case, since the concrete powder 13 is included in the concrete powder layer 14, when the concrete powder layer adhesion process B is completed, there is almost no concrete powder 13.

Water is naturally required for obtaining the adhering force by the cement 3, and in this embodiment, water of about 5% by weight of the waste concrete material aggregate is added.

In this case, ultra-concrete powder are previously added to the water. If the water to which the ultra-concrete powder are added is used, the ultra-concrete powder enters the concrete powder layer 14 or the ground concrete aggregate 12 together with water, density of the concrete powder layer 14 or the ground concrete aggregate 12 becomes high, and the strength can be enhanced.

As the ultra-concrete powder, silica fumes are used, and about 5% by weight ultra-concrete powder with respect to the cement amount is added.

As the cement 3 to be added and mixed, normal Portland cement is used.

The adding and mixing ratio of the cement 3 is about 5% by weight of waste concrete material aggregate 10.

For mixing and stirring operation in the concrete powder layer adhesion process B, a lateral type tumbling drum 4 is used, the ground concrete aggregate 12, the concrete powder 13, the cement 3 and water taken out from the triturator 2 are input into the tumbling drum 4 through an inlet opening which opened at one end of the tumbling drum 4, these materials are mixed and stirred by the tumbling drum 4, and they are moved toward an outlet opening which opens at the other end of the tumbling drum 4, and round rough surface concrete aggregate 15 which passed through the next concrete powder adhering process C and which was processed is taken out from the outlet opening.

A diameter of the tumbling drum 4 is about 3m, and the revolution number thereof is 2 to 20 rpm.

Since the cement 3 and water are used in the concrete powder layer adhesion process B, concrete powder 13 or cement 3 may adhere to the inner surface of the tumbling drum 4 and the tumbling drum 4 may be contaminated.

Thereupon, in this embodiment, a rubber liner 43 having a diameter slightly smaller than an inner diameter of the tumbling drum 4 is attached to the inner surface of the tumbling drum 4 at one or several locations thereof, and the concrete powder 13 or cement 3 is prevented from adhering to the inner surface of the tumbling drum 4 by vibration of the rubber liner 43 caused by resiliently swinging motion of the rubber liner 43.

In the concrete powder layer adhesion process B, the concrete powder layer 14 is allowed to adhere to the ground concrete aggregate 12 while adding the vibration. If the vibration is added, the concrete powder layer 14 is tightened and solidified and thus, its strength is enhanced, and the adhering force of the concrete powder layer 14 to the ground concrete aggregate 12 is enhanced.

In this embodiment, a support frame 40 of the tumbling drum 4 is resiliently supported by a spring 41, a vibrator 42 is mounted, and vibration (e.g., about 900 rpm, amplitude of 0.5 to 7.0 mm) caused by the vibrator 42 is added to the entire tumbling drum 4 while rotating the tumbling drum 4.

Next, in the concrete powder adhering process C, concrete powder 6 are added in the round rough surface concrete aggregate 15 obtained in the concrete powder layer adhesion process B and are stirred, thereby preventing the round rough surface aggregates 15 from bonding with each other.

If the round rough surface concrete aggregates 15 obtained in the concrete powder layer adhesion process B are accumulated and stored until they are processed in the rubbing process D, the round rough surface concrete aggregates 15 may be bonded to each other due to moisture and weight at the time of accumulation.

Thereupon, if the concrete powder 6 are added to the round rough surface concrete aggregate 15 and stirred, the concrete powder 6 functions as dustingpowder, and it is possible to prevent the round rough surface concrete aggregates 15 from bonding to each other.

In this case, a portion of the concrete powder 13 (including concrete powder) obtained in the material grinding process A is used as the concrete powder 6 in this embodiment.

That is, portions of the ground concrete aggregate 12 and concrete powder 13 (including concrete powder) obtained in the material grinding process are not processed in the concrete powder layer adhesion process and are remained, the remained ground concrete aggregate 12 and concrete powder 13 (including concrete powder) are added in front of the outlet opening of the tumbling drum 4, and they are stirred by the rotation of the tumbling drum 4. With this, the concrete powder adhering process C can be carried out continuously after the concrete powder layer adhesion process B.

Next, in the rubbing process D, round rough surface concrete aggregates 15, 15 obtained through the concrete powder layer adhesion process B and the concrete powder adhering process C are rubbed, and round polished concrete aggregate 17 and rubbed-off concrete powder 18 (including rubbed concrete powder) whose surfaces are formed into polished surfaces 16 are obtained.

As described above, the round rough surface concrete aggregate 15 which passed through the concrete powder layer adhesion process B has rough surface and large surface area and thus, the water-absorption ratio is extremely high.

Thereupon, if the surface is formed into the polished surface 16 by the rubbing process D, roughness on the surface is removed, the surface area can be reduced, and the water-absorption ratio can be suppressed as compared with the round rough surface concrete aggregate 15.

At the same time, since the concrete powder adhering process C is rubbed and removed from the surface of the concrete powder layer 14; it is possible to obtain the rubbed-off concrete powder 18 in addition to the concrete powder 6 added in the concrete powder adhering process C. In this case, in order to preferably use the rubbed-off concrete powder 18 as concrete aggregate, it is preferable to manage such that a total amount of the concrete powder 6 and rubbed-off concrete powder 18 (including rubbed concrete powder) meets an attached document 1 of JIS A5308.

As a device for carrying out the rubbing operation, like the triturator 2 used in the material grinding process A, there is used a rubbing device 5 (e.g., Hurricane made by Shin Roku Seiki Kabushiki Kaisha) in which a rotor 51 is eccentrically provided in a lateral type rotary drum 50. The round rough surface concrete aggregate 15 taken out from the tumbling drum 4 of the concrete powder layer adhesion process B is input into the rotary drum 50, the rotary drum 50 and the rotor 51 are rotated in the opposite directions and in this state, the round rough surface concrete aggregates 15 are sandwiched between opposed gap 52 to stir the round rough surface concrete aggregates 15 such the they are rubbed against each other, thereby removing angular portions and forming round surfaces.

In this case, a diameter of the rotary drum 50 is about 2m, the revolution number thereof is 2 to 20 rpm, and the revolution number of the rotor 51 is 3 to 30 rpm.

In this case, in order to strengthen the rubbing operation between the waste concrete material aggregates 10, 10, a deviation amount of the rotor 21 is increased and the opposed gap 22 is set narrower. On the other hand, in the rubbing process D, in order to weaken the rubbing operation between the round rough surface concrete aggregates 15, 15, a deviation amount of the rotor 51 is reduced and the opposed gap 52 is set wider.

Results of tests of the round polished concrete aggregate 17 produced in this manner are shown in the following Tables 1 and 2.

Table 1 shows a result of test of round rough polished concrete aggregate (sample X-1) having powder diameter of 5 to 20 mm. For dry specific gravity, water-absorption ratio, and percentage of absolute volume, the ground rough concrete aggregate (sample Y-1) and round rough surface concrete aggregate (sample Z-1) are compared with each other.

Table 2 shows a result of test of round polished thin concrete aggregate (sample X-2) having powder diameter less than 5 mm. For dry specific gravity and water-absorption ratio, the ground thin concrete aggregate (sample Y-2) and round rough surface thin concrete aggregate (sample Z-2) are compared with each other.

**[Table 1]**

| Kind | Dry specific gravity | Surface dry specific gravity | water-absorption ratio (%) | percentage of absolute volume (%) |
|---|---|---|---|---|
| Ground rough concrete aggregate (sample Y-1) | 2.31 | 2.43 | 5.0 | 63.9 |
| Round rough surface concrete aggregate (sample Z-1) | 2.32 | 2.44 | 5.0 | 64.9 |
| Round rough polished concrete aggregate (sample X-1) | 2.42 | 2.50 | 3.6 | 69.3 |

**[Table 2]**

| Kind | Dry specific gravity | Surface dry specific gravity | water-absorption ratio (%) |
|---|---|---|---|
| Ground rough concrete aggregate (sample Y-1) | 1.97 | 2.24 | 11.9 |
| Round rough surface concrete aggregate (sample Z-1) | 2.06 | 2.28 | 9.7 |
| Round rough polished concrete aggregate (sample X-1) | 2.12 | 2.34 | 9.5 |

As shown in Table 1, in the case of the round rough polished concrete aggregate (sample X-1), the specific gravity is slightly enhanced as compared with the ground rough concrete aggregate (sample Y-1) and the round rough surface concrete aggregate (sample Z-1), but the water-absorption ratio is largely reduced as compared with the ground rough concrete aggregate (sample Y-1) and the round rough surface concrete aggregate (sample Z-1) and the percentage of absolute volume is enhanced as compared with the ground rough concrete aggregate (sample Y-1) and the round rough surface concrete aggregate (sample Z-1).

As shown in Table 2, in the case of the round polished thin concrete aggregate (sample X-2), the specific gravity and the water-absorption ratio are slightly enhanced as compared with the ground thin concrete aggregate (sample Y-2) and the round rough surface thin concrete aggregate (sample Z-2).

Next, composition and performance (unit water volume and strength) of concrete using the round polished concrete aggregate (sample X) are shown in Table 3, composition and performance (unit water volume and strength) of concrete using the ground concrete aggregate (sample Y) are shown in Table 4, and composition and performance (unit water volume and strength) of concrete using the round rough surface concrete aggregate (sample Z) are shown in Table 5.

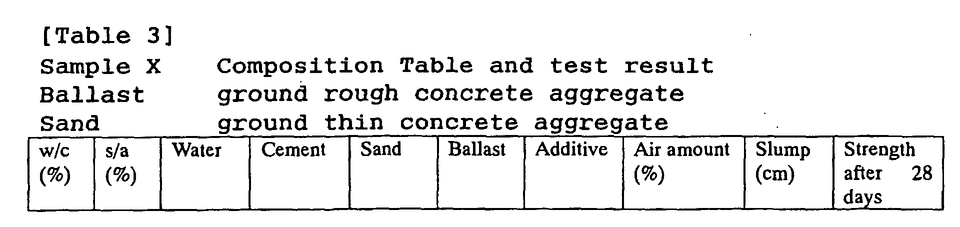

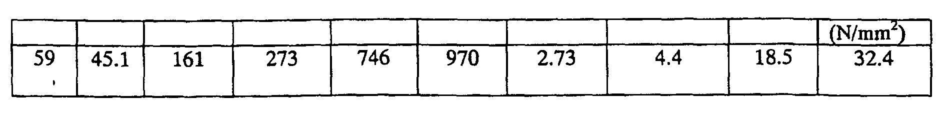

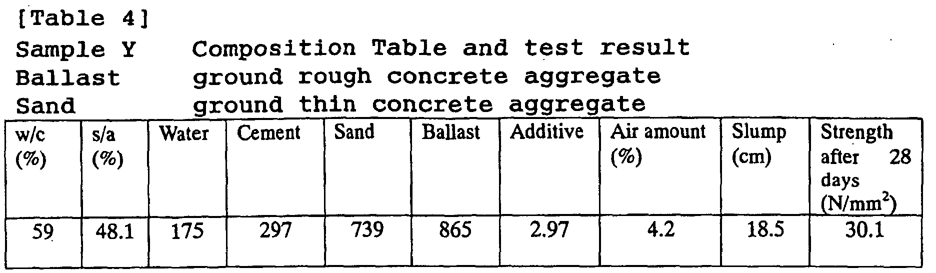

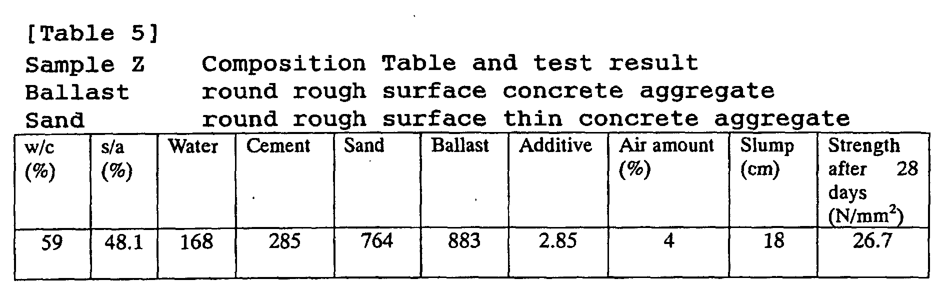

If Tables 3, 4 and 5 are compared with each other, it is found that when target slump values are set to substantially the same values, the unit water volume of the round polished concrete aggregate (sample X) in Table 3 is largely reduced, and the strength is enhanced.

In the attached document 1 of JIS A5308, it is prescribed that the dry specific gravity of rough aggregate is 2.5% or higher, the water-absorption ratio is 3.0% or lower, the dry specific gravity of the thin aggregate is 2.5% or higher and the water-absorption ratio is 3.5% or lower. In this point, in the case of the round polished concrete aggregate of the present invention, both the specific gravity and water-absorption ratio do not satisfy the above requirements (Tables 1 and 2).

This is because that concrete having high water-absorption characteristics is used as raw material. Even if the specific gravity and water-absorption ratio show higher values, in view of the entire concrete using this round polished concrete aggregate, it is possible to enhance the quality of the concrete by reducing the unit water volume and enhancing the strength. If the water-absorption characteristics of the aggregate is high, since water-retaining characteristics are enhanced correspondingly, water oozes from the aggregate and even after a concrete structure is constructed, solidification effect of the concrete is obtained for a long term, and durability of the concrete can be enhanced. However, since there is restriction by the attached document 1 of JIS A5308 under the present circumstances, if the concrete is used as the concrete aggregate, there is a possibility that the concrete aggregate can be used for flooring using poor composition, or the concrete aggregate can be used as light-weighted concrete aggregate struck at high location such as a tower block.

As is found in Table 3, if the round polished concrete aggregate of the present invention is used as the concrete aggregate, excellent results can be obtained in terms of the unit water volume (slump value) as compared with the ground concrete aggregate and the round rough surface concrete aggregate. This proves that the outer shape of the round polished concrete aggregate is round and its surface is worked into a polished surface. It could be confirmed visually and by touch that the round polished concrete aggregate was round, and roughness on the surface was removed as compared with the round rough surface concrete aggregate.

### INDUSTRIAL APPLICABILITY

As explained above, according to the round polished concrete aggregate (claims 1 to 5) of the present invention, the water-absorption characteristics are suppressed while rounding the outer shape thereof. Therefore, if the round polished concrete aggregate is used as concrete aggregate, the concrete aggregate is prone to roll due to the round outer shape, flowability of concrete so-called workability can be enhanced, the percentage of absolute volume is enhanced and the unit water volume is largely reduced, and the quality of concrete can be enhanced.

According to the producing method (claim 6) of round polished concrete aggregate of the present invention, there is effect that the roundpolished concrete aggregate can efficiently be produced by the material grinding process, the concrete powder layer adhesion process and the rubbing process and at the same time, the rubbed-off concrete powder (including rubbed concrete powder) can be obtained.

Further, since concrete powder generated in the material grinding process is introduced into the concrete powder layer, there is effect that labor and cost relating disposal of concrete powder can be reduced.

According to the producing method (claim 7) of round polished concrete aggregate of the present invention, when round rough surface concrete aggregate obtained in the concrete powder layer adhesion process is accumulated and store, since the concrete powder functions as sword powder, it is possible to prevent the round rough surface concrete aggregates from bonding to each other.

In the concrete powder layer adhesion process, if the concrete powder layer is adhered to the ground concrete aggregate while vibrating the layer (claim 8), the concrete powder layer itself is tightened and thus, its strength is enhanced, and the adhering force of the concrete powder layer with respect to the ground concrete aggregate is enhanced.

Further, in the concrete powder layer adhesion process, if water is included in the ultra-concrete powder (claim 9), the ultra-concrete powder enter into the concrete powder layer or ground concrete aggregate together with water, densities of the concrete powder layer and ground concrete aggregate are increased, and strength can be enhanced.

## Claims

1. A round polished concrete aggregate wherein waste concrete material aggregate obtained by crushing waste concrete is ground and angular portions are removed to obtain ground concrete aggregate, concrete powder layer to which concrete powder (including concrete powder) is bonded by cement is adhered to an outer peripheral surface of the ground concrete aggregate, and its outer shape is rounded, and the surface is formed into a polished surface.

2. A round polished concrete aggregate according to claim 1, wherein said waste concrete material aggregate is waste concrete thin aggregate having powder diameter less than 5 mm.

3. A round polished concrete aggregate according to claim 1, wherein said waste concrete material aggregate is waste concrete rough aggregate having powder diameter of 5 to 25 mm.

4. A round polished concrete aggregate according to claim 1, wherein said waste concrete material aggregate includes waste concrete thin aggregate having powder diameter less than 5 mm and waste concrete rough aggregate having powder diameter of 5 to 25 mm.

5. A round polished concrete aggregate according to any one of claims 1 to 4, wherein said round polished concrete aggregate is utilized as concrete aggregate as it is, or said round polished concrete aggregate is sorted and is utilized as concrete aggregate.

6. A producing method of round polished concrete aggregate comprising,
a material grinding process in which waste concrete material aggregate obtained by crushing waste concrete is ground such that angular portions thereof are removed, thereby obtaining ground concrete aggregate and concrete powder (including concrete powder),
a concrete powder layer adhesion process in which cement and water are mixed into the ground concrete aggregate and concrete powder obtained in the material grinding process and stirred, thereby adhering concrete powder layer to which the concrete powder is bonded by cement to an outer peripheral surface of the ground concrete aggregate, thereby obtaining round rough surface concrete aggregate having round outer shape, and
a rubbing process in which round rough surface concrete aggregates obtained in the concrete powder layer adhesion process are rubbed against each other to obtain round polished concrete aggregate and rubbed-off concrete powder (including rubbed concrete powder) whose surfaces are formed into polished surfaces.

7. A producing method of round polished concrete aggregate comprising,
a material grinding process in which waste concrete material aggregate obtained by crushing waste concrete is ground such that angular portions thereof are removed, thereby obtaining ground concrete aggregate and concrete powder (including concrete powder),
a concrete powder layer adhesion process in which cement and water are mixed into the ground concrete aggregate and concrete powder obtained in the material grinding process and stirred, thereby adhering concrete powder layer to which the concrete powder is bonded by cement to an outer peripheral surface of the ground concrete aggregate, thereby obtaining round rough surface concrete aggregate having round outer shape,
a concrete powder adhering process in which concrete powder is adhered to the round rough surface concrete aggregate obtained by the concrete powder layer adhesion process and stirred, thereby preventing the round rough surface concrete aggregates from bonding to each other, and
a rubbing process in which round rough surface concrete aggregates obtained in the concrete powder adhering process are rubbed against each other to obtain round polished concrete aggregate and rubbed-off concrete powder (including rubbed concrete powder) whose surfaces are formed into polished surfaces.

8. A producing method of round polished concrete aggregate according to claim 6 or 7, wherein in said concrete powder layer adhesion process, concrete powder is bonded to concrete powder layer by cement, the concrete powder layer is adhered to the outer peripheral surface of the ground concrete aggregate while vibrating the concrete powder layer.

9. A producing method of round polished concrete aggregate according to claim 6, 7 or 8, wherein in said concrete powder layer adhesion process, ultra-concrete powder are included in water which is used for obtaining adhering force of the cement.
